## Europäisches Patentamt
## European Patent Office
### Office européen des brevets

(11) Veröffentlichungsnummer: **0 274 049**
A2

## EUROPÄISCHE PATENTANMELDUNG

(21) Anmeldenummer: 87117534.5

(51) Int. Cl.⁴: **B60J 5/04**

(22) Anmeldetag: 27.11.87

(30) Priorität: 11.12.86 DE 3642429

(43) Veröffentlichungstag der Anmeldung:
13.07.88 Patentblatt 88/28

(84) Benannte Vertragsstaaten:
AT BE CH DE ES FR GB GR IT LI LU NL SE

(71) Anmelder: **Hüls'Troisdorf Aktiengesellschaft**
**Postfach 11 65**
**D-5210 Troisdorf(DE)**

(72) Erfinder: **Hellriegel, Edmund**
**Akazienweg 1**
**D-5024 Pulheim 1(DE)**

(54) Fahrzeugtür.

(57) Es wird eine Fahrzeugtür mit einer Außenwand und einer im Abstand zu der Außenwand angeordneten Innenwand beschrieben, wobei die Außenwand und/oder die Innenwand wenigstens weitgehend aus Kunststoff bestehen. Die Fahrzeugtür weist dabei ein vollständig in das Kunststoffmaterial eingebettetes Verstärkungsteil auf, wobei das Verstärkungsteil einen geschlossenen, der Türkontur entsprechenden Rahmen bildet. Weiterhin ist eine Rammschutzstrebe vorgesehen, die zwischen wenigstens einem Scharnierträger und dem Türschloßträger verläuft und seitlich auf die Fahrzeugtür einwirkende Kräfte an die Karosserie überträgt.

Fig.1

EP 0 274 049 A2

# Fahrzeugtür

Die Erfindung betrifft eine Fahrzeugtür gemäß dem Oberbegriff des Anspruchs 1.

Fahrzeugtüren, die ganz oder teilweise aus Kunststoff bestehen, sind bereits bekannt. Aus der EP-OS 0 096 188 (= US-PS 4,512,240) ist eine Fahrzeugtür bekannt, mit einer Außenwand und einer im Abstand zu der Außenwand angeordneten Innenwand, wobei die Außenwand und/oder die Innenwand wenigstens weitgehend aus Kunststoff bestehen, sowie einem versteifenden Verstärkungsteil, das mit wenigstens einem Scharnier bzw. Scharnierträger und einem Türschloß bzw. Türschloßträger verbunden ist. Die Außenwand und die Innenwand bestehen dabei jeweils aus glasfaserverstärktem Kunststoff.

Eine ähnliche Türausbildung ist auch in der DE-PS 31 04 681 und in der US-PS 4,328,642 beschrieben.

Die bekannten Fahrzeugtüren müssen mit hohem Aufwand montiert werden, weiterhin ist das versteifende Verstärkungsteil - üblicherweise aus Stahlblech - korrosionsanfällig. Weiterhin sind diese Türen, trotz des hohen Kunststoff-Anteils, relativ schwer oder wenig formstabil.

Aus der nicht vorveröffentlichten DE-OS 35 20 975 (entspricht EP-OS 0 204 996) ist bereits eine Fahrzeugtür bekannt, bei der das Verstärkungsteil einen der Türkontur entsprechenden, geschlossenen Rahmen bildet, der in das Kunststoffmaterial der Innenwand eingebettet und von diesem umhüllt ist. Das versteifende Verstärkungsteil ist damit vor Korrosion geschützt, weiterhin gestattet die einstückige Ausbildung aus Verstärkungsteil und Innenwand eine einfache, kostengünstige Montage der Fahrzeugtür bei geringem Gesamtgewicht.

Eine Fahrzeugtür gemäß der DE-OS 35 20 975 verhält sich jedoch bezüglich ihres Verformungsverhaltens bei seitlicher Beanspruchung ·(Aufprall eines weiteren Fahrzeugs auf die Türaußenwand) unbefriedigend, da das Skelett in der Innenwand erst bei stärkerer Verformung höhere Kräfte aufzunehmen vermag.

Aufgabe der Erfindung ist es, eine Fahrzeugtür, die weitgehend aus Kunststoff besteht, zur Verfügung zu stellen, wobei die Fahrzeugtür eine hohe Steifigkeit und Stabilität aufweist, einfach und kostengünstig hergestellt werden kann, eine geringe Schrumpfneigung bei Temperaturänderungen aufweist sowie unempfindlich bezüglich Korrosionseinflüssen ist.

Die Erfindung löst diese Aufgabe durch eine Fahrzeugtür gemäß dem Anspruch 1.

Erfindungswesentlich ist dabei, daß das versteifende Verstärkungsteil - ggf. mit Ausnahme von Funktionsteilen wie Türschloß und Scharnieren - von dem Kunststoffmaterial der Fahrzeugtür umhüllt ist. Das einen äußeren Rahmen bildende, versteifende Verstärkungsteil bestimmt dadurch weitgehend die Formstabilität der Fahrzeugtür. Weiterhin verhindert das Verstärkungsteil eine Schwindung des Kunststoffmaterials beim Spritzgießen sowie ein Schrumpfen bei Temperaturänderungen und bestimmt so die Dimensionsstabilität der Fahrzeugtür.

Das der Türkontur entsprechende, einen geschlossenen Rahmen bildende, versteifende Verstärkungsteil kann dabei einstückiger Bestandteil der Innenwand der Fahrzeugtür sein, es kann jedoch auch ganz oder teilweise in die Außenwand integriert sein. Ferner können Außen-und Innenwand sowie das versteifende Verstärkungsteil in einem einzigen Fertigungsschritt einstückig hergestellt sein.

Die erfindungsgemäße Anordnung einer zwischen den Krafteinleitungspunkten (Scharnierträger und Schloßträger bzw. Scharnier und Schloß) verlaufenden Rammschutzstrebe (sidebeam) an oder innerhalb der Außenwand bewirkt, daß bei seitlicher Kraft einwirkung auf die Fahrzeugtür schon bei geringem Verformungsweg der Außenwand die Kräfte über das (die) Scharnier(e) und das Schloß auf die Karosserie übertragen werden.

Bei vorgegebenem Verformungsweg ist somit eine hohe Energieaufnahme der Fahrzeugtür und damit ein effektiver Schutz der Fahrzeug-Insassen gegeben.

Die erfindungsgemäß vorgesehene Rammschutzstrebe (sidebeam) verläuft bei der üblichen Türanordnung mit seitlich angebrachten Scharnieren und diesem gegenüberliegenden Schloß (-träger) etwa horizontal.

Die erfindungsgemäß vorgesehene Rammschutzstrebe wird bevorzugt innerhalb der Außenwand der Fahrzeugtür angeordnet und dabei vollständig von dem Kunststoffmaterial der Außenwand umgeben. Auf diese Weise ist ein zuverlässiger Korrosionsschutz gewährleistet, ohne daß ein höherer Fertigungsaufwand vonnöten wäre. Bevorzugt kann auch das versteifende, als geschlossener Rahmen ausgebildete Verstärkungsteil (Skelett) in die Außenwand der Fahrzeugtür integriert werden. Der geschlossene Rahmen umschließt dabei ebenfalls das gegebenenfalls versenkbar ausgebildete Türfenster, weiterhin können zusätzliche Streben zur weiteren Versteifung, insbesondere auch unterhalb des Türfenster, vorgesehen sein. Bevorzugt werden dabei sämtliche versteifenden Verstärkungsteile vollständig von. dem Kunststoffmaterial der Außenwand umhüllt.

Es ist jedoch auch möglich, das versteifende, der Türkontur entsprechende, einen geschlossenen Rahmen bildende Verstärkungsteil in die Innenwand der Fahrzeugtür einzubetten und die Rammschutzstrebe (sidebeam) als separates Teil mit entsprechenden Befestigungselementen so an dem bzw. den Scharnierträgern und dem Schloßträger zu befestigen, daß die Rammschutzstrebe (sidebeam) parallel und im Abstand zur Innenwand verläuft und dabei an der Außenwand anliegt. In diesem Fall ist die Rammschutzstrebe nicht notwendigerweise von dem Kunststoffmaterial der Innen-oder Außenwand umgeben. Zwischen der Innenwand und der Rammschutzstrebe kann dabei noch eine Türscheibe abgesenkt werden.

Eine vorteilhafte Ausbildung der Erfindung sieht vor, die Rammschutzstrebe in die Außenwand zu integrieren und das versteifende, der Türkontur entsprechende und einen geschlossenen Rahmen bildende Verstärkungsteil in die Innenwand einzubetten. Die Außenwand wird dabei vorzugsweise lediglich die unterhalb der Fensteröffnung liegende Außenkontur der Fahrzeugtür bilden, während die Fensterumfassung sowohl auf der Innen-als auch auf der Außenseite von der Innenwand gebildet wird. Bei dieser Ausbildung der Erfindung wird die Außenwand mit der einstückig verbundenen Rammschutzstrebe bei der Montage der Tür so mit der Innenwand verbunden, daß die Rammschutzstrebe mit einem Scharnier bzw. Scharnierträger und dem Türschloß bzw. Türschloßträger der Innenwand verbunden ist.

Ist das versteifende Verstärkungsteil in die Außenwand eingebettet, kann die Innenwand vorzugsweise so gestaltet sein, daß sie lediglich das unterhalb der Fensteröffnung liegende Türinnere abdeckt, während die Außenwand oberhalb der unteren Fensterbegrenzung sowohl die Innen-als auch die Außenkontur der Tür bildet.

Das versteifende Verstärkungsteil und/oder die Rammschutzstrebe bestehen bevorzugt aus Metall, insbesondere Stahl. Das Verstärkungsteil ist dabei vorzugsweise als Schweißkonstruktion aus Rohren und/oder Preßteilen gefertigt. Zusätzliche Versteifungsstreben können auch in die einstückige Türaußen-und/oder Türinnenwand, beispielsweise mittels Schraubverbindungen, eingesetzt werden.

Weitere vorteilhafte Ausgestaltungen der Erfindung sind in den Ansprüchen 2 bis 13 angegeben. Nachfolgend wird die Erfindung anhand eines Ausführungsbeispiels sowie der Zeichnung erläutert.

Es zeigen dabei

Figur 1 eine Ansicht der Fahrzeugtür sowie zwei Stirnansichten gemäß dem Ausführungsbeispiel,

Figur 2 das Verstärkungsteil und die Seitenstrebe in drei Ansichten (schloßseitige Ansicht aus Platzgründen gespiegelt),

Figur 3 das Kopfteil (Scharnierträger) in zwei Ansichten und in zwei Schnitten,

Figur 4 die Innenwand in einer Ansicht sowie drei Schnitten,

Figur 5 die Rammschutzstrebe.

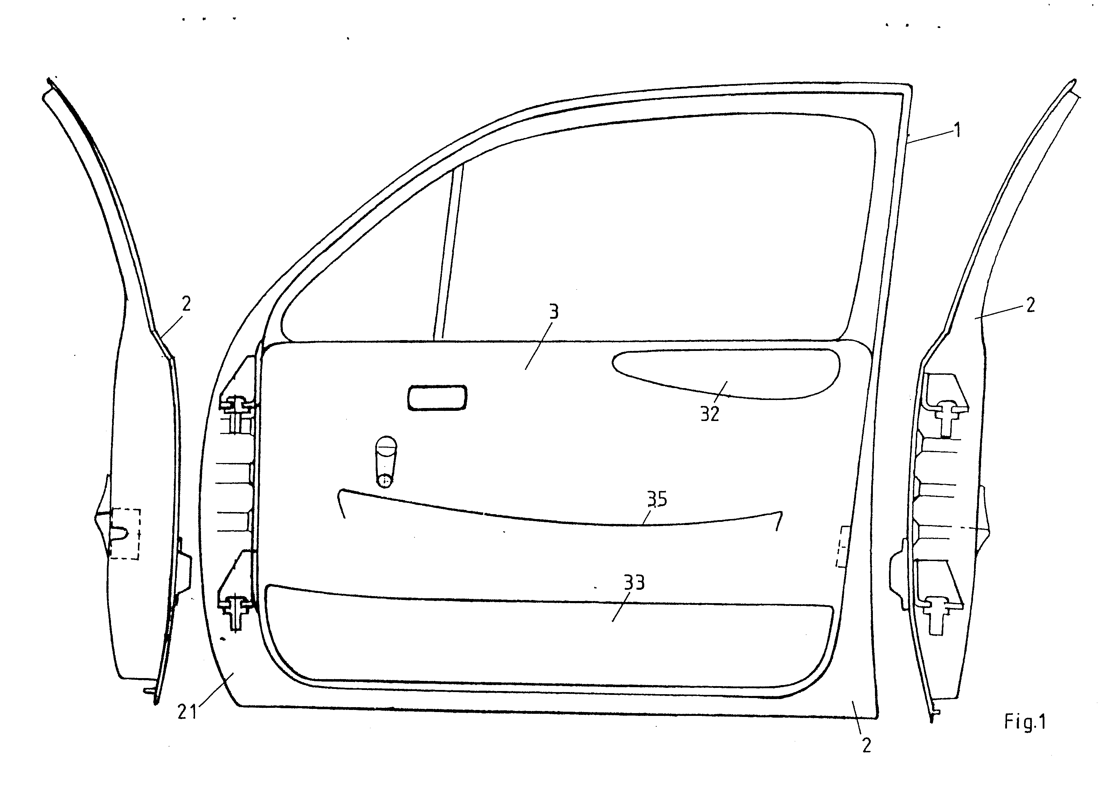

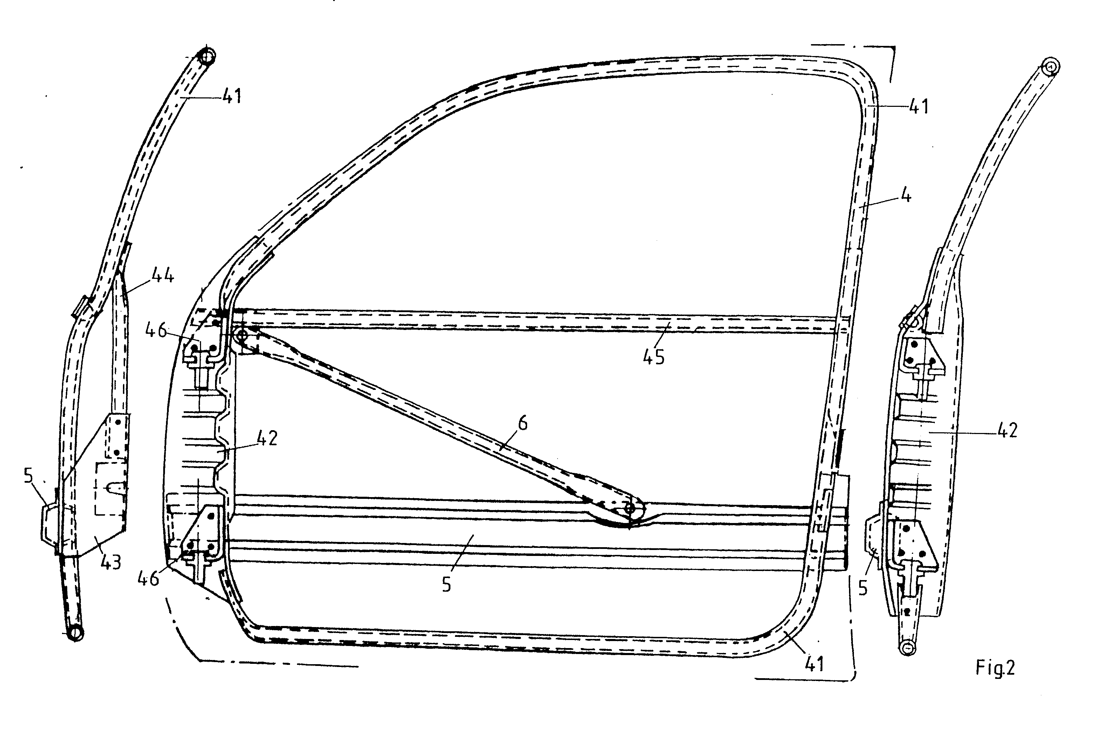

Figur 1 zeigt eine erfindungsgemäße Fahrzeugtür 1 gemäß einem ersten Ausführungsbeispiel der Erfindung in einer Ansicht vom Fahrzeuginneren sowie in den beiden Seitenansichten. Durch den schalenförmigen Aufbau der Außenwand 2 wird eine hohe Steifigkeit erreicht. In die Außenwand 2 ist das versteifende Verstärkungsteil 4 sowie die damit verbundene Rammschutzstrebe 5 (Figur 2) eingebettet, d.h., das Kunststoffmaterial 21 der Außenwand 2 umhüllt die Rammschutzstrebe 5 sowie das Verstärkungsteil 4 - ggf. mit Ausnahme des Schloßträgers 43 und der Scharniergewerbe 46 etc. - vollständig.

In dem dargestellten Ausführungsbeispiel wurde die Außenwand 2 im RRIM-(Reinforced Reaction Injection Molding-) Verfahren hergestellt. Dazu wird das Skelett (Verstärkungsteil 4) und die damit verbundene Rammschutzstrebe 5 in ein Spritzgieß-Werkzeug eingelegt und mit glasfaserverstärktem, duroplastisch aushärtendem Polyurethan (PUR) umspritzt.

Die Ausgestaltung der Fahrzeugtür-Außenwand 2 als skelettverstärktes Spritzgußteil erlaubt eine freie Gestaltung der äußeren Form, um die Designwünsche sowie aerodynamische Anforderungen zu erfüllen. Weiterhin können kostengünstig auch komplizierte Funktionsteile integriert werden, wie Türgriffschalen oder eine umlaufende Haltenase für eine Türdichtung etc.

Das eingebettete Skelett (Verstärkungsteil 4) verleiht der Fahrzeugtür eine hohe Dimensions-und Formstabilität, es verhindert eine zu starke Schwindung der Außenwand bei der Herstellung und vermindert die thermische Dehnung bzw. Schrumpfung bei Temperaturschwankungen wesentlich.

Bevorzugt wird das versteifende Verstärkungsteil 4 als Stahl-oder Aluminiumkonstruktion erstellt. Es ist jedoch auch möglich, das Verstärkungsteil 4 aus faserverstärkten Werkstoffen, insbesondere glas-oder kohlefaserverstärkten Duroplasten, herzustellen.

Gemäß einem bevorzugten Ausführungsbeispiel (Figur 2) besteht das Verstärkungsteil 4 aus einem der Türkontur entsprechenden, die Türfensteröffnung an drei Seiten begrenzenden, äußeren Rohrrahmen 41, der zusammen mit dem winkelförmigen Kopfstück 42 einen geschlossen Rahmen bildet. Als weitere stabilisierende Komponenten sind eine, die Fensteröffnung nach unten begrenzende, horizontale Gürtelstrebe 45, ein Türschloßträger 43 und eine damit verbundene Skelettspreize 44 vorgesehen. Die Skelettspreize 44 dient dabei insbesondere der Erhöhung der Biegesteifigkeit bei horizontaler Krafteinleitung.

Die Rammschutzstrebe 5 verläuft in dem Ausführungsbeispiel etwa horizontal und ist mit dem Türschloßträger 43 und über das Kopfstück 42 mit den Scharniergewerben 46 verbunden.

Die Rammschutzstrebe 5 ist aus zwei entsprechend profilierten Stahlblechen 51, 52 als Hohlprofil zusammengesetzt. Es können jedoch auch vorteilhaft entsprechende Rohrprofile eingesetzt werden. Da die Rammschutzstrebe 5 unmittelbar an der Außenperipherie der Außenwand anliegt, leitet sie auf die Türaußenwand einwirkende statische oder dynamische Kräfte unmittelbar über die Krafteinleitungspunkte (Scharniere und Schloß) in die Fahrzeugkarosserie über. Bei entsprechend biegesteifer Auslegung der Rammschutzstrebe 5 können so bei geringer Verformung hohe Kräfte aufgefangen werden. Bevorzugt wird die Rammschutzstrebe 5 zur Ausbildung entsprechender Sichtkanten (Charakterlinien) der Türaußenkontur herangezogen. Hierdurch können sonst sichtbare Einfallstellen in der Außenkontur vermieden werden.

In dem Ausführungsbeispiel der Erfindung ist zur Erhöhung der Biegesteifigkeit bei vertikaler Krafteinleitung eine zusätzliche Diagonalstrebe 6 vorgesehen, die aus fertigungstechnischen Gründen nicht in die einstückige Türaußenwand 2 integriert, sondern separat an dieser befestigt ist. Die somit nicht von dem Kunststoffmaterial der Außenwand umgebene Diagonalstrebe 6 verbindet das obere Scharniergewerbe 46 mit der Rammschutzstrebe 5 (Figur 2).

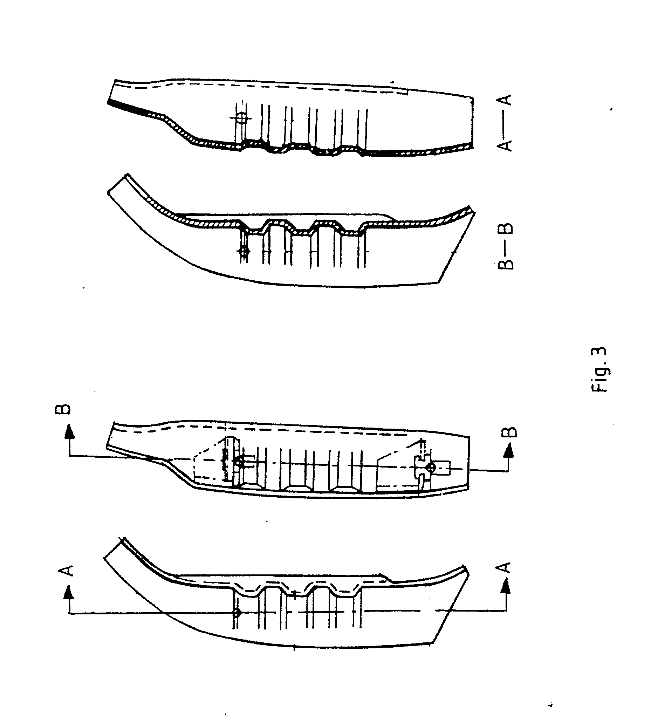

Das als Scharnierträger dienende Kopfstück 42 ist in Figur 3 vergrößert dargestellt. Es ist als winkelförmiges, verripptes Stahlblech-Formteil ausgebildet. Neben den Scharniergewerben 46 sind auch der äußere Rorrahmen 41, die Diagonalstrebe 6, die Gürtelstrebe 45 sowie die Rammschutzstrebe 5 an dem Kopfstück 42 befestigt.

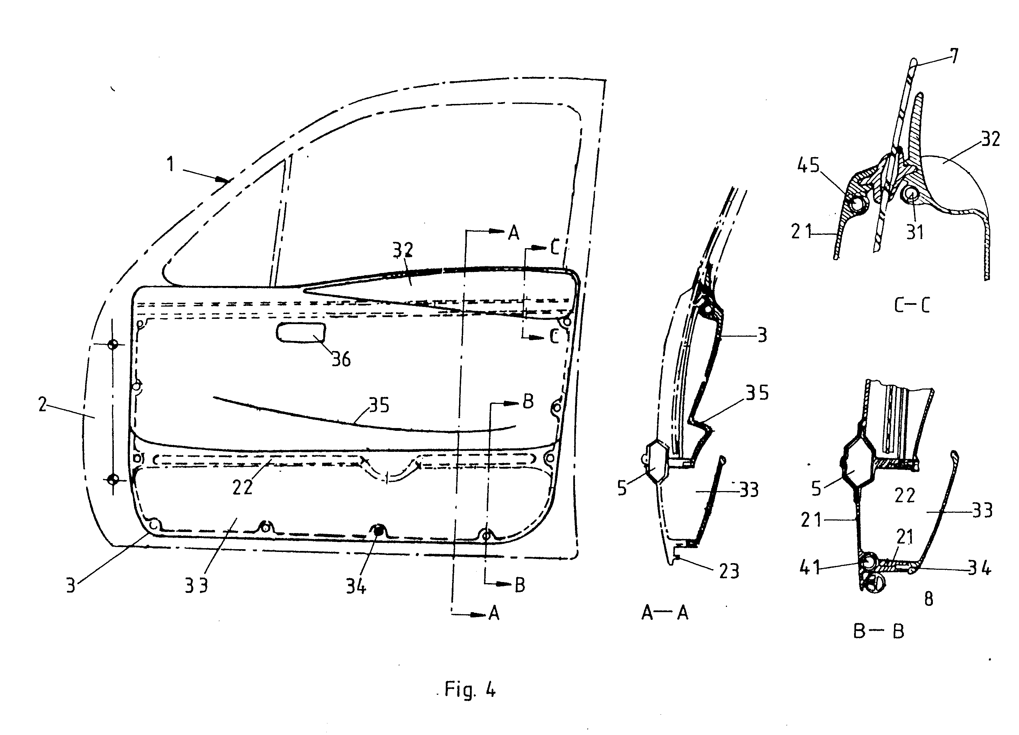

In Figur 4 ist die Innenwand 3 der Tür 1, deren äußere Konturen lediglich angedeutet sind, in einer Ansicht vom Fahrzeuginneren sowie in drei Schnitten dargestellt. Die Innenwand 3 ist ebenfalls als Spritzgußteil im RRIM-Verfahren gefertigt. Besonders vorteilhaft können dabei zusätzliche Vesteifungsstreben 31 sowie dekorative Oberflächenbeläge (nicht dargestellt) in einem Fertigungsschritt integriert werden.

Die Innenwand 3 wird mittels entsprechender Befestigungselemente 34, wie Schrauben oder Klipse etc., mit der Außenwand 2 verbunden. Sie trägt damit zur Stabilität der Tür 1 wesentlich bei. In dem Ausführungsbeispiel sind Funktionselemente wie Armlehne 35, Ellenbogenauflage 32, Türöffner 36 und Türablage 33 in die Innenwand 3 eingeformt. Die Türablage 33 wird dabei nach außen von dem Kunststoffmaterial 21 der Außenwand 2 begrenzt, so daß sich eine optimale Ausnutzung des Türkörpers ergibt.

Die Fensterscheibe 7 kann absenkbar ausgebildet sein, hierzu werden entsprechende Führungsleisten und ein Führungstrieb an der Innenwand oder der Außenwand befestigt. Bevorzugt können entsprechende Befestigungsstreben als einstückige Bestandteile der Innenwand oder der Außenwand eingespritzt werden.

In dem Ausführungsbeispiel wird die Absenktiefe von dem horizontal verlaufenden Steg 22 der Außenwand 2 begrenzt. Dieser Steg 22 unterteilt den Türraum in einen oberen Türraum und einen eine Türablage 33 bildenden unteren Türraum. Die Ellenbogenauflage 32 verdeckt die ggf. im abgesenkten Zustand der Fensterscheibe 7 noch sichtbaren Teile der Scheibe 7.

Im Schnitt A-A der Figur 4 ist die an der Außenwand 2 angeordnete stegförmige Haltenase 23 für eine umlaufende Türdichtung 8 angedeutet. Die Integration einer die äußere Türfuge abdichtenden Türdichtung ist bei der erfindungsgemäßen Tür besonders vorteilhaft, da das Anspritzen einer entsprechenden Haltenase nur einen geringen Mehraufwand erfordert.

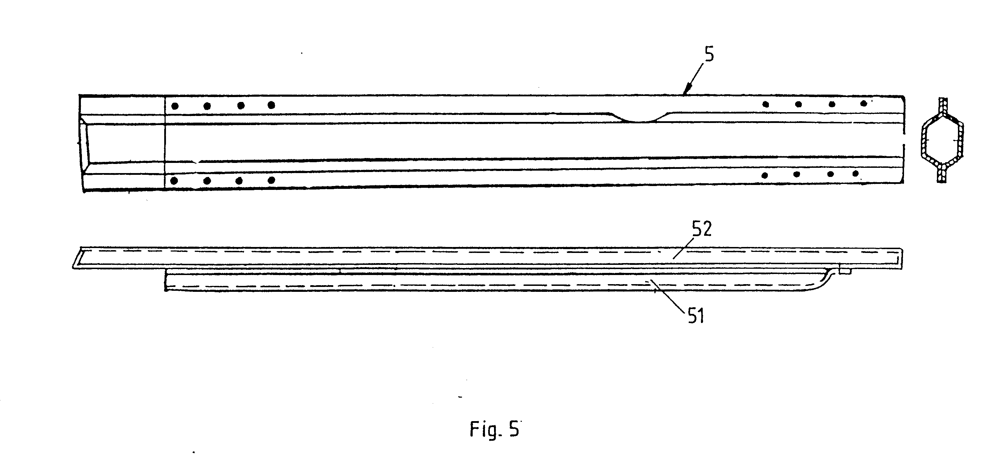

In Figur 5 ist die Rammschutzstrebe 5, bestehend aus zwei Preßblechen 51 und 52 in zwei Ansichten und einem Schnitt näher dargestellt.

Die in dem Ausführungsbeispiel beschriebene Fahrzeugtür verbindet die Vorteile einer herkömmlichen Fahrzeugtür aus Stahlblech (hohe Steifigkeit, hohe Verwindungs-und Verzugsfreiheit, hohe Sicherheit) mit den Vorteilen einer Kunststoffkonstruktion (geringes Gewicht, freizügige Gestaltungsmöglichkeit, flexible Flächenbeplankung). Die erfindungsgemäße Kunststofftür kann problemlos lackiert werden, ggf. auch in einem Arbeitsgang mit der Herstellung der Außen-bzw. der Innenwand (In Mold Coating). Bei der Montage der Türaußenwand und der Türinnenwand gemäß dem Ausführungsbeispiel wird die Türinnenwand bevorzugt an den das Verstärkungsteil umgebenden Kunststoffwülsten der Türaußenwand befestigt. Hierzu kann vorteilhaft an der Türaußenwand eine entsprechende Anlagefläche vorgesehen werden. Ggf. kann die Innenwand mit der Außenwand verklebt werden.

## Ansprüche

1. Fahrzeugtür,
   -mit einer Außenwand (2),
   -einer im Abstand zu der Außenwand angeordneten Innenwand (3),

--wobei die Außenwand (2) und/oder die Innenwand (3) wenigstens weitgehend aus Kunststoff bestehen,

-mit einen versteifenden Verstärkungsteil (4), das mit wenigstens einem Scharnier bzw. Scharnierträger (46) und einem Türschloß bzw. Türschloßträger (43) verbunden ist,

-und mit einer insbesondere etwa horizontal verlaufenden Rammschutzstrebe (sidebeam) (5), **dadurch gekennzeichnet,** daß das versteifende Verstärkungsteil einen der Türkontur entsprechenden, geschlossenen Rahmen bildet, der in das Kunststoffmaterial der Außenwand und/oder Innenwand eingebettet und von diesem umhüllt ist, und daß die Rammschutzstrebe (5) wenigstens teilweise innerhalb der Außenwand (2) verläuft oder an dieser anliegt.

2. Fahrzeugtür nach Anspruch 1, **dadurch gekennzeichnet,** daß das versteifende Verstärkungsteil (4) und/oder die Rammschutzstrebe (5) aus Stahl bestehen.

3. Fahrzeugtür nach einem der Ansprüche 1 oder 2, **dadurch gekennzeichnet,** daß das Verstärkungsteil (4) aus wenigstens einem äußeren Rohrrahmen (41), einem Türschloßträger (43) sowie einem als Scharnierträger dienenden Kopfstück (42) besteht.

4. Fahrzeugtür nach Anspruch 3, **dadurch gekennzeichnet,** daß das Kopfstück (42) als profiliertes Winkelstück ausgebildet ist und als Verankerungsplatte für Scharniergewebe (46), den äußeren Rohrrahmen (41) und die Rammschutzstrebe (5) dient.

5. Fahrzeugtür nach Anspruch 3, **dadurch gekennzeichnet,** daß eine zusätzliche Diagonalstrebe (6) über Verbindungselemente mit dem Kopfstück (42) und der Rammschutzstrebe (5) verbunden ist.

6. Fahrzeugtür nach einem der Ansprüche 1 bis 5, **dadurch gekennzeichnet,** daß das Verstärkungsteil (4) und die Rammschutzstrebe (5) einstückiger Bestandteil der Außenwand (2) sind.

7. Fahrzeugtür nach Anspruch 6, **dadurch gekennzeichnet,** daß die Außenwand (2) in Höhe der Rammschutzstrebe (5) einen zum Fahrzeuginneren gerichteten Steg (22) aufweist, der den unteren Türraum für eine Türablage (33) von dem oberen Türraum abgrenzt.

8. Fahrzeugtür nach einem der Ansprüche 1 bis 7, **dadurch gekennzeichnet,** daß eine Türablage (33) vorgesehen ist, die nach außen von der Außenwand (2) und nach innen von der Innenwand (3) begrenzt wird.

9. Fahrzeugtür nach einem der Ansprüche 1 bis 8, **dadurch gekennzeichnet,** daß die Außenwand (2) in RRIM-(Reinforced Reaction Injection Molding-)Verfahren aus glasfaserverstärktem, duroplastisch aushärtendem Polyurethan hergestellt wird, wobei das Verstärkungsteil (4) sowie die Rammschutzstrebe (5) als Einlegeteile integriert sind.

10. Fahrzeugtür nach einem der Ansprüche 1 bis 9, **dadurch gekennzeichnet,** daß die Innenwand (3) im RRIM-(Reinforced Reaction Injection Molding-)Verfahren aus glasfaserverstärktem, duroplastisch aushärtendem Polyurethan hergestellt wird, wobei eine dekorative Oberflächenverkleidung in die Spritzgußform eingelegt wird.

11. Fahrzeugtür nach Anspruch 3, **dadurch gekennzeichnet,** daß das versteifende Verstärkungsteil (4) unterhalb der Fensteröffnung eine etwa horizontale Gürtelstrebe (25) aufweist, die so mit dem äußeren Rohrrahmen (41) verbunden ist, daß die Fensteröffnung vollständig von diesem umschlossen ist.

12. Fahrzeugtür nach Anspruch 11, **dadurch gekennzeichnet,** daß das Kunststoffmaterial der Außenwand (2) oder der Innenwand (3) den äußeren Rohrrahmen (41) und die Gürtelstrebe (45) wulstartig umschließt, wobei diese Wülste im Bereich der Fensterumfassung sowohl die Außen- als auch die Innenkontur der Fahrzeugtür (1) bilden.

13. Fahrzeugtür nach Anspruch 12, **dadurch gekennzeichnet,** daß die Außenwand (2) oder die Innenwand (3) der Fahrzeugtür (1) an der unteren Begrenzungslinie der Fensteröffnung endet.

Fig.1

0 274 049

41

41

4

44

46

45

5

42

6

42

43

5

5

46

5

41

41

Fig.2

0 274 049

Fig. 3

Fig. 4

Fig. 5

0 274 049